# EUROPÄISCHE PATENTSCHRIFT

(11) **EP 0 774 604 B1**
(45) Veröffentlichungstag und Bekanntmachung des Hinweises auf die Patenterteilung: **14.08.2002**
(21) Anmeldenummer: 96118310.0
(22) Anmeldetag: 15.11.1996
(51) Int. Cl.: F16J 15/02

(54) **Flachdichtungsmaterialien**
Flat gasket materials
Matériaux pour joint plat

(30) Priorität: 17.11.1995 DE 19542957
(43) Veröffentlichungstag der Anmeldung: 21.05.1997
(73) Patentinhaber: Bamberger Kaliko GmbH, 96052 Bamberg (DE)
(72) Erfinder: Hiemenz, Brigitte, 96120 Bischberg (DE); Füssmann, Klaus, 96120 Bischberg (DE); Polivka, Werner, 96110 Schesslitz (DE)
(74) Vertreter: Olgemöller, Luitgard, Dr.

(56) Entgegenhaltungen:
- EP-A- 0 197 301
- US-A- 3 740 062
- US-A- 4 156 533
- US-A- 4 211 851
- US-A- 4 477 094
- US-A- 4 546 033
- US-A- 5 262 454
- PATENT ABSTRACTS OF JAPAN vol. 17, no. 306 (M-1428), 11.Juni 1993 & JP 05 026353 A (NIPPON PILLAR), 2.Februar 1993,

## Beschreibung

Die vorliegende Erfindung betrifft Material für Flachdichtungen zwischen zumindest zwei abzudichtenden Flächen aus zumindest einem organischen polymeren Werkstoff und Armierungsfasem.

Flachdichtungen werden an Stoßstellen zwischen Dichtflächen,z.B. zwischen Rohrleitungen, zur Erzeugung eines geschlossenen Systems eingesetzt. Sie müssen daher hohen Anforderungen bezüglich Druck, Temperatur und Medien gerecht werden. Bisher hielten Flachdichtungen, die Asbestfasern aufwiesen, diese Beanspruchungen in ausreichendem Maße aus.

Da Asbest als Armierungsfaser in Flachdichtungsmaterialien vom Gesetzgeber vor einiger Zeit aber verboten worden ist, mußten neue Dichtungsmaterialien ohne Asbest auf den Markt gebracht werden. Vorgeschlagen werden hierfür Verbundwerkstoffe aus organisch polymerem Werkstoff (Gummi) und Armierungsfasern. Als Armierungsfasern wurden unter anderem Aramidfasem, Glasfasern und auch Polyacrylnitrilfasem verwendet. Diese Fasern sind im Gegensatz zu den Asbestfasern von gleichmäßigem Durchmesser und glatter Oberfläche. Darüber hinaus können sie maximal mit einer Länge von ca. 3 mm eingesetzt werden. Längere Fasern sind nicht einmischbar, da das Verarbeiten der Pulpe im Mischer zu Gebilden mit stark agglomerierten Fasern, wie zopfähnlichen Strukturen führt. Beim Einbau solcher herkömmlichen Flachdichtungen wird das Volumen der Dichtung aufgrund von Einbaukräften und Temperatureinwirkung (Setzverhalten) verringert. Da Flachdichtungen während ihres Gebrauches hohen Beanspruchungen, wie z.B. hoher Temperatur, ausgesetzt sind, wurde dabei festgestellt, daß es zu einer weiteren Volumenverringerung der Flachdichtung kommt. Das führte zu auftretenden Leckagen, die ein Austausch der Flachdichtungen zur Folge hatte. Auch sind die derzeitigen Flachdichtungen aufgrund ihres Herstellungsverfahrens relativ dick, das wiederum einer mechanischen Beanspruchbarkeit entgegenwirkt.

Die US 4,156,533 beschreibt endlose Dichtungsmaterialien für den Einsatz z.B. als Ofentürdichtung, die eine Temperaturbeständigkeit oberhalb 500°C besitzen. Dafür schlägt diese Schrift eine Dichtung aus einem äußeren gewebten oder geflochtenen schlauchähnlichen Teil (Hülle) und einem inneren Kern vor, wobei dieser ein expandierfähiges anorganisches Material (z.B. Vermiculit) und als Binder anorganische oder organische Materialien z.B. CR aufweist.

Weiterhin offenbart die US 4,211,851 in Füllmaterial in Form einer Beschichtungspaste für z.B. Unterwassertunnelkonstruktionen, das bei Kontakt mit Wasser quillt und dabei seine volle Dichtwirkung entfaltet.

Die US 4,477,094 stellt sich die Aufgabe, ein Dichtmaterial mit einer hohen Temperaturbeständigkeit (z.B. für Verbrennungsmaschinen) bereitzustellen. Dafür wird eine Mischung vorgeschlagen, die zuvor expandierten Vermiculit in Kombination mit Fasern und weiteren Bestandteilen enthält, die auf eine Metallplatte aufgebracht wird. Der Mischung kann weiterer Vermiculit zugesetzt werden, der erst während des Gebrauchs der Dichtung expandiert. Das Material dieser Dichtung wird mit Hilfe von Beschichtungs- oder Extrusionsverfahren, wie sie aus der Papierherstellung bekannt sind, auf die genannte Metallplatte aufgebracht.

Es ist daher Aufgabe der vorliegenden Erfindung, Flachdichtungsmaterialien und daraus hergestellte Flachdichtungen bereitzustellen, die stabiler sind, als die derzeitigen astbestfreien Flachdichtungen.

Überraschenderweise konnte gefunden werden, daß Flachdichtungsmaterialien mit ausgezeichneten Eigenschaften erhalten werden können, wenn sie in den organisch polymeren Werkstoff eingebettet Armierungfasern in Verbundform enthalten und dieser Werkstoff bei Temperaturerhöhung expandiert.

So ist es möglich, die Armierungsfasern mit expandierfähigen organischen Polymeren zu beschichten und durch Temperaturerhöhung bereits vor der Anwendung des Materials als Flachdichtung eine einmalige Volumenzunahme zu erzeugen. Auf diese Art und Weise werden Flachdichtungen erzielt, die mechanische Eigenschaften aufweisen, die für einfache Anwendungsgebiete, z.B. für Wasserleitungen, ausreichen.

Werden jedoch höhere Anforderungen an thermische und mechanische Stabilität gestellt und müssen zudem kompliziert geformte Teile miteinander verbunden werden, ist es vorteilhaft, den Expansionsprozeß des Flachdichtungsmaterials erst während des Gebrauchs, nämlich durch erhöhte Temperatur der abzudichtenden Teile, stattfinden zu lassen. Prinzipiell ist es aber auch möglich, vor dem Gebrauch des Flachdichtungsmaterials eine teilweise Volumenvergrößerung vorzunehmen und den endgültigen Zustand der Flachdichtung erst während des Anwendungsfalls zu erreichen. Diese Flachdichtungen weisen den Vorteil auf, daß sich die jeweilige Dichtung ihrer Umgebung besser anpaßt, so daß unebene Dichtungsflächen und Hohlräume zwischen der Rohrleitungsverbindung ausgeglichen werden können. Es wird somit aufwendiges Nacharbeiten vermieden und außerdem werden Flachdichtungen erzielt, die insbesondere bei hoher Temperatur und hohen Drücken eine hohe Lebensdauer aufweisen.

Für die Herstellung der erfindungsgemäßen Flachdichtungen werden z. B.organisch polymere Werkstoffe bevorzugt auf der Basis von Acrylat, Styren-Butadien-Copolymer, Polyurethan und andere in Form von Latices oder Dispersionen verwendet. Als organisch polymere Werkstoffe können außerdem elastomere Werkstoffe zum Einsatz kommen, z.B. auf der Basis von synthetischem oder natürlichem Kautschuk oder Silicone oder Mischungen davon. Durch die elastischen Eigenschaften des organisch polymeren Werkstoffs wird die mechanische Beständigkeit der Flachdichtung positiv beeinflußt.

Als Treibmittel kommen vorzugsweise Mikroperlen zum Einsatz. Diese Mikroperlen, die aus mikroverkapselten Lösungsmitteln bestehen, werden bei einer Temperatur von ca. 80 - 180° C aktiv. Bei dieser Temperatur wird dann das Volumen des Flachdichtungsmaterials vergrößert. Zusätzllich können dem organisch polymeren Werkstoff auch Blähgraphit und/oder Vermiculite zugesetzt werden. Diese Treibmittel bewirken eine Expansion des organisch polymeren Werkstoffs bei Temperaturen > 180°C, so daß z.B. durch Kombination dieser mit den Mikroperlen der Anwendungsbereich der Flachdichtungen über einen großen Temperaturbereich gewährleistet ist. Prinzipiell ist es aber auch möglich, daß der organisch polymere Werkstoff von sich aus bei Temperaturerhöhung expandiert, z.B. durch während der Polymerisation bzw. Vernetzung freiwerdender Gase (Wasser, Kohlendioxid), so daß eine Volumenvergrößerung des organisch polymeren Werkstoffs durch Gasblasenbildung eintritt.

Eine besondere Ausführungsvariante besteht darin, in den organisch polymeren Werkstoff Armierungsfasern in Verbundform einzubetten. Unter "Verbundform'' ist dabei jede Form zu verstehen, in welcher die Fasern oder daraus gebildeten Fäden bereits als solche, d.h. ohne Hilfsmittel, wie Verkleben o.dgl., untereinander verbunden sind. So soll jede Art von Gewebe oder Gewirktem oder geflochtenem Material o.dgl. unter den Ausdruck fallen, sofern die enthaltenen Fasern oder Fäden Kreuzungspunkte aufweisen, mit denen sie sich gegenseitig fixieren, dagegen nicht gelegte Fasern, wie Filz o.dgl.. Ganz besonders bevorzugt sind Fäden aus Multifilamenten mit definiertem Faserdurchmessern, wobei die Einzelfaser beispielsweise einen Querschnitt von x = 9 µm aufweisen kann. Die Fäden können dabei eine beliebige Länge erreichen, z.B. Endlosfäden sein.

Bevorzugt wird ein Gewebe als Armierung eingesetzt. Als Beispiel seien hier Gewebe aus Glasfasern oder Aramidfasern genannt. Prinzipiell können aber sämtliche synthetischen oder natürlichen Fasern verwendet werden. Das Gewebe sollte meistens relativ dicht sein. Das Gewebe ist sehr strapazierfähig, weil der Fadenwinkel im Gewebe ca. 90° beträgt. Alternativ oder zusätzlich ist es möglich, mehrere Schichten oder Lagen des Faserverbundes übereinander anzuordnen. Welche Ausführungsform gewählt wird, hängt dabei von den Anforderungen an die gewünschte Dichtung ab. Der prinzipielle Vorteil bei der Verwendung von Armierungsfasem in Verbundform besteht darin, daß der Faseranteil im eingebetteten polymeren Werkstoff relativ hoch ist. Das bewirkt auch die Erhöhung der thermischen Stabilität der Flachdichtung.

Das erfindungsgemäße Material für Flachdichtungen mit Armierungsfasern läßt sich herstellen, indem die Armierungsfasem z.B. in Verbundform mit Werkstofflösung oder Dispersion des organischen Polymers, das bei Temperaturerhöhung expandiert, z.B. in Form einer Paste getränkt und/oder ein- oder beidseitig beschichtet werden. Wenn die Armierungsfasem zuerst getränkt werden, quetscht man vorzugsweise überschüssiges Material ab und trocknet den behandelten Faserverbund bevor gegebenenfalls die Beschichtung erfolgt. Anschließend kann der Werkstoff in seine vorläufige Endform überführt werden, d.h. durch Wärmezufuhr kann sein Volumen bereits vor Einbau ins z.B. Rohrleitungssystem vergrößert werden. Er wird dabei verfestigt, d.h. zum Beispiel mit den üblichen Maßnahmen polymerisiert bzw. vernetzt und ggf. wird ihm Flüssigkeit entzogen (Lösungsmittel, Suspensionsmittel u. dgl.). Das Material, mit dem die Armierungsfasern getränkt werden und das Material, mit dem sie ggf. beschichtet werden, kann identisch oder verschieden sein. Fakultativ können anschließend zusätzlich auf einer oder beiden Seiten weitere Werkstoffschichten aufgebracht werden, die ebenfalls identisch mit dem darunterliegenden Werkstoff oder von ihm verschieden sind. Alternativ oder zusätzlich kann das Flachdichtungsmaterial einer Behandlung vor und/oder nach der Verfestigung unterworfen werden, um es beispielsweise öl- oder wasserabweisend zu machen. Oleophobe und hydrophobe Ausrüstungen sind Stand der Technik. Es kann sich beispielsweise um Fluorkarbonharze, Wachse, Paraffine und dergleichen handeln. Die so hergestellten Materalien sind vorteilhafterweise in der Lage, bei weiterer Temperaturerhöhung (z.B. während des Einsatzes) weiter zu expandieren. Prinzipiell ist es möglich, auf eine Verfestigung vor dem Einbau (Vorexpandierung)der Flachdichtungen zu verzichten.

Das erfindungsgemäße Material für Flachdichtungen kann dünner gestaltet sein als herkömmliche Dichtungen, ohne daß seine ausgezeichneten Eigenschaften verloren gehen. Zur Erzielung größerer Dicken lassen sich verschiedene Maßnahmen einsetzen. So kann ein dickerer Armierungsfaserverbund eingesetzt werden, z.B. ein dickeres und ggf. dichteres Gewebe. Des weiteren kann die Dicke der aufgetragenen Beschichtung oder die Zahl der aufgetragenen Schichten des organisch polymeren Werkstoffs erhöht werden. Eine weitere Variante ist es, mehrere Armierungsfasern in Verbundform aufeinander zu legen. Diese können zuerst mit dem organisch polymeren Werkstoff getränkt und/oder beschichtet werden bevor sie aufeinander gelegt und verpreßt und ggf. ein weiteres Mal beschichtet werden. Alternativ können sie auch zuerst aufeinander gelegt und dann gemeinsam mit dem Werkstoff versehen werden.

Werden mehrere Schichten oder Lagen der Armierungsfasern in Verbundform eingesetzt, so werden diese bevorzugt so zueinander angeordnet, daß die Fadenrichtungen der einzelnen Faserverbünde unterschiedlich, beispielsweise sternförmig sind.

Ein weiterer Vorteil ergibt sich bei der Herstellung des erfindungsgemäßen Flachdichtungsmaterials, das Armierungsfasern in Verbundform enthält. So kann bei der Herstellung dieses Flachdichtungsmaterials auf den Einsatz von Kalandern verzichtet werden, der derzeit bei Verwendung von Kurzfasern benutzt werden muß. So läßt sich das erfindungsgemäße Flachdichtungsmaterial in vorteilhafter Weise auf Textilveredlungsanlagen (Textilbeschichtungsanlagen oder Kaschiermaschinen) erzeugen. Daher können als organisch polymere Werkstoffe auch Materialien eingesetzt werden, die für ein Kalandrierverfahren nicht geeignet sind, wie z.B. die oben erwähnten Polymeren, die auf Wasserbasis (aus wäßriger Dispersion) hergestellt sind. Auf den Kalanderwalzen könnte man die anfallenden Wassermengen nicht entfernen. Ein weiterer Vorteil ist die Möglichkeit, im kontinuierlichen Verfahren Endlosware herzustellen, was zu Kostenvorteilen führt. Bei den Kalanderverfahren läßt sich nur Formatware in Breite und Umfang der Kalanderwalze herstellen. Diese würde beim Einrollen brechen, da kurze Fasern, wie bereits erwähnt, dem Flachdichtungsmaterial unflexible Eigenschaften verleihen. Die neuen Flachdichtungsmaterialien hingegen sind äußerst biegsam und können demzufolge als Rollenware hergestellt werden. Das bringt wiederum Vorteile beim Lagern dieser Ware mit sich, was letztendlich zu einer Kosteneinsparung führt.

Durch die Kombination eines organisch polymeren Werkstoffs, der bei Temperaturerhöhung expandiert, in Verbindung mit Armierungsfasern in Verbundform werden Flachdichtungen erzielt, die eine hohe Flexibilität aufweisen, so daß die Dichtungen nicht brechen, weder beim Ausschneiden noch beim Transport, bei der Montage oder während des Betriebs. Solche Vorteile machen die erfindungsgemäßen Matrialien zum Beispiel wertvoll für den Einsatz beim Abdichten von Gehäuseteilen, z.B. in Motorblöcken oder Getriebeteilen. Durch die Expansionsfähigkeit des organisch polymeren Werkstoffes wird ein Nachziehen der Dichtung nicht mehr erforderlich, was zu einer Kosten- und Zeiteinsparung führt. Des weiteren können nunmehr z.B. Rohrleitungssysteme miteinander verbunden werden, bei denen Leckagen aufgrund unzureichender Abdichtung durch die Flachdichtung vermindert werden.

Grundsätzlich ist es aber möglich, auch Armierungsfasern, die nicht in Verbundform vorliegen, erfindungsgemäß einzusetzen, wie z.B. Filze, Fasern und Vliese, insbesondere dann, wenn die Anforderung der Dichtungen an die mechanische Stabilität geringer ist. Auch unterscheiden sich die Herstellungsverfahren dieser Flachdichtungen nicht von den Materialien, die Armierungsfasem in Verbundform enthalten. Als Armierungsfasem sind grundsätzlich alle aus dem Stand der Technik bekannte natürliche und synthetische Materialien, wie z.B. Glas, Aramid, Polyester, Kohlenstoffasern und Mischungen hieraus, verwendbar.

Anhand eines Beispiels soll die Erfindung näher erläutert werden.
Ein EC 9-68-Tex-Glasseidengewebe (ca. 0,2 kg.m⁻² (ca. 200 g/qm)) wurde mit einer mikroverkapselten lösungsmittelenthaltenen Acrylat-Dispersion (Emce foam 185® - Emce Chemie, Düren) beidseitig beschichtet und durch eine Foulardpassage öl- und wasserabweisend ausgerüstet. Direkt nach dem Einbau in eine 10 bar Hochdruckkondensatleitung zeigte sich eine kleine Leckage, die nach wenigen Sekunden durch das Aufschäumen der Beschichtungspaste, hervorgerufen durch die zunehmende Temperatur des Flansches, abgedichtet wurde. Die Dichtung erfüllte dann leckagefrei ihre Aufgabe auch bei starken Lastwechseln aufgrund der hohen Flexibilität der Flachdichtung.

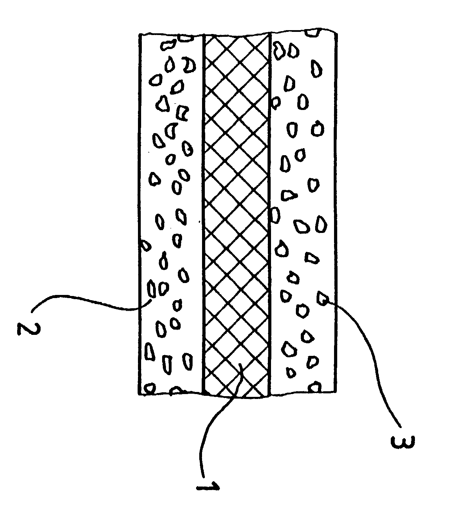

Die einzige Figur zeigt einen Querschnitt des erfindungsgemäßen Flachdichtungsmaterials.

Diese bevorzugte Ausführungsvariante, nämlich den Einsatz eines expandierfähigen organisch polymeren Werkstoffs in Verbindung mit Armierungsfasem in Verbundform, weist ein Gewebe 1 aus Aramid (Ca. 0,22 kg.m⁻² (220 g/qm)) auf, das von beiden Seiten mit einer wässrigen Acrylat-Dispersion 2 mit einer Dicke von ca. 0.5 mm beschichtet worden ist. Diese Acrylat-Dispersion enthielt mikroverkapseltes Lösungsmittel (Isobutan), das bei Temperaturerhöhung Hohlräume 3 bewirkt, die eine Volumenzunahme des Acrylates zur Folge hatte.

## Patentansprüche

1. Material für Flachdichtungen zwischen zumindest zwei abzudichtenden Flächen, das zumindest einen organisch polymeren Werkstoff und Armierungsfasern aufweist, **dadurch gekennzeichnet, daß** in den organisch polymeren Werkstoff Armierungsfasern in Verbundform eingebettet sind und daß der organisch polymere Werkstoff bei Temperaturerhöhung expandiert.

2. Material für Flachdichtungen nach Anspruch 1, **dadurch gekennzeichnet, daß** der organisch polymere Werkstoff zumindest während des Gebrauches als Flachdichtung bei Temperaturerhöhung expandiert.

3. Material für Flachdichtungen nach Anspruch 1 und/oder 2, **dadurch gekennzeichnet, daß** der organisch polymere Werkstoff als Treibmittel mikroverkapselte Lösungsmittelteilchen (Mikroperlen) enthält.

4. Material für Flachdichtungen nach zumindest einem der vorhergehenden Ansprüche, **dadurch gekennzeichnet, daß** der organisch polymere Werkstoff als Treibmittel Blähgraphit und/oder Vermiculite enthält.

5. Material für Flachdichtungen nach zumindest einem der vorhergehenden Ansprüche, **dadurch gekennzeichnet, daß** der organisch polymere Werkstoff ein elastomerer Werkstoff ist.

6. Material für Flachdichtungen nach zumindest einem der vorhergehenden Ansprüche, **dadurch gekennzeichnet, daß** der organisch polymere Werkstoff aus wäßriger Dispersion hergestellt ist.

7. Material für Flachdichtungen nach zumindest einem der vorgehergehenden Ansprüche, **dadurch gekennzeichnet, daß** der elastomere Werkstoff auf Basis von synthetischem oder natürlichem Kautschuk oder Silikonen oder Mischungen davon hergestellt ist.

8. Material für Flachdichtungen nach Anspruch 1, **dadurch gekennzeichnet, daß** die Armierungsfasem in Form von Gewebe vorliegen.

9. Material für Flachdichtungen nach zumindest einem der Ansprüche 1 oder 8, **dadurch gekennzeichnet, daß** die Armierungsfasern in zwei oder mehr Lagen vorhanden sind.

10. Flachdichtung aus Material nach zumindest einem der Ansprüche 1 bis 9.

11. Verfahren zum Herstellen von Flachdichtungsmaterialien nach Anspruch 1, umfassend die Schritte
(a)
- Tränken von in Verbundform vorliegenden Armierungsfasern mit der Dispersion oder Lösung eines organisch polymeren Werkstoffs, der bei Temperaturerhöhung expandiert, oder mit dessen Vorprodukten, sowie anschließendes Abquetschen überschüssigen Materials
und/oder
- ein- oder beidseitiges Beschichten von in Verbundform vorliegenden Armierungsfasern mit einem organisch polymeren Werkstoff, der bei Temperaturerhöhung expandiert, oder mit dessen Vorprodukten
und anschließend
(b) Verfestigen des organisch polymeren Werkstoffs durch Temperaturerhöhung und ggf. Entfernen vorhandener Flüssigkeit.

12. Verfahren zum Herstellen von Flachdichtungsmaterialien nach Anspruch 11, **dadurch gekennzeichnet, daß** die Oberfläche des Flachdichtungsmaterials vor und/oder nach dem Verfestigen mit weiteren Werkstoffschichten und/oder Ausrüstungsmaterialien beschichtet und/oder getränkt wird.

## Claims

1. Material for flat gaskets between at least two surfaces to be sealed, which has at least one organic polymer material and reinforcing fibres, **characterised in that** reinforcing fibres in composite form are embedded in the organic polymer material and **in that** the organic polymer material expands during an increase in temperature.

2. Material for flat gaskets according to claim 1, **characterised in that** the organic polymer material expands during an increase in temperature at least during use as a flat gasket.

3. Material for flat gaskets according to claim 1 and/or 2, **characterised in that** the organic polymer material contains microencapsulated solvent particles (micropearls) as propellant.

4. Material for flat gaskets according to at least one of the preceding claims, **characterised in that** the organic polymer material contains expanded graphite and/or vermiculite as propellant.

5. Material for flat gaskets according to at least one of the preceding claims, **characterised in that** the organic polymer material is an elastomeric material.

6. Material for flat gaskets according to at least one of the preceding claims, **characterised in that** the organic polymer material is produced from aqueous dispersion.

7. Material for flat gaskets according to at least one of the preceding claims, **characterised in that** the elastomeric material is produced based on synthetic or natural rubber or silicones or mixtures thereof.

8. Material for flat gaskets according to claim 1, **characterised in that** the reinforcing fibres are present in the form of fabric.

9. Material for flat gaskets according to at least one of claims 1 or 8, **characterised in that** the reinforcing fibres are present in two or more layers.

10. Flat gasket made from material according to at least one of claims 1 to 9.

11. Process for producing flat gasket materials according to claim 1, comprising the steps
(a)
- impregnating reinforcing fibres present in composite form with the dispersion or solution of an organic polymer material, which expands during an increase in temperature, or with its precursors, and then squeezing off excess material and/or
- single-sided or double-sided coating of reinforcing fibres present in composite form with an organic polymer material, which expands during an increase in temperature, or with its precursors
and then
(b) solidifying the organic polymer material by increasing the temperature and optionally removing fluid which is present.

12. Process for producing flat gasket materials according to claim 11, **characterised in that** the surface of the flat gasket material is coated and/or impregnated with further material layers and/or finishing materials before and/or after solidification.

## Revendications

1. Matériau pour joints plats entre au moins deux surfaces à rendre étanches, qui comprend au moins un matériau polymère organique et des fibres d'armure, **caractérisé en ce que** des fibres d'armure sont incorporées sous forme liée au matériau polymère organique et **en ce que** le matériau polymère organique s'expanse par élévation de la température.

2. Matériau pour joints plats suivant la revendication 1, **caractérisé en ce que** le matériau polymère organique s'expanse au moins pendant l'utilisation en tant que joint plat s'expanse par élévation de la température.

3. Matériau pour joints plats suivant la revendication 1 et/ou 2, **caractérisé en ce que** le matériau polymère organique contient comme agent porogène des particules de solvant micro-encapsulées (microperles).

4. Matériau pour joints plats suivant au moins l'une des revendications précédentes, **caractérisé en ce que** le matériau polymère organique contient comme agent porogène du graphite gonflant et/ou de la vermiculite.

5. Matériau pour joints plats suivant au moins l'une des revendications précédentes, **caractérisé en ce que** le matériau polymère organique est un matériau élastomère.

6. Matériau pour joints plats suivant au moins l'une des revendications précédentes, **caractérisé en ce que** le matériau polymère organique est préparé en dispersion dans l'eau.

7. Matériau pour joints plats suivant au moins l'une des revendications précédentes, **caractérisé en ce que** le matériau élastomère est préparé à base de caoutchouc synthétique ou naturel ou de silicones ou de leurs mélanges.

8. Matériau pour joints plats suivant la revendication 1, **caractérisé en ce que** les fibres d'armure se présentent sous la forme de tissu.

9. Matériau pour joints plats suivant l'une au moins des revendications 1 ou 8, **caractérisé en ce que** les fibres d'armure sont présentes en deux couches ou en plusieurs couches.

10. Joint plat en matériau suivant au moins l'une des revendications 1 à 9.

11. Procédé de fabrication de matériaux de joint plat suivant la revendication 1, comprenant les stades
(a)
- imprégnation de fibres d'armure présentes sous forme liée par la dispersion ou la solution d'un matériau polymère organique qui s'expanse lorsque la température s'élève ou de leurs précurseurs, ainsi que ensuite expression de la matière en excès
et/ou
- revêtement d'un côté ou des deux côtés de fibres d'armure présentes sous forme liée par un matériau polymère organique qui s'expanse lorsque la température s'élève ou par ses précurseurs et ensuite
(b) durcissement du matériau polymère organique par élévation de la température et le cas échéant élimination du liquide présent.

12. Procédé de fabrication de matériaux de joints plats suivant la revendication 11, **caractérisé en ce qu'**il consiste à revêtir et/ou à imprégner la surface du matériau de joint plat avant et/ou après le durcissement par d'autres couches de matériau et/ou par d'autres matériaux de finition.
